# EUROPEAN PATENT APPLICATION

(11) **EP 1 918 923 A2**
(43) Date of publication of application: **07.05.2008**
(21) Application number: 08150888.9
(22) Date of filing: 08.04.2002
(51) Int. Cl.: G11B 7/007, G11B 7/26

(54) **Method of transferring data with respect to an optical storage medium**

(30) Priority: 02.05.2001 KR 20010023747; 29.09.2001 KR 20010061041
(62) Divisional of application: 02252517.4
(71) Applicant: Samsung Electronics Co., Ltd., Suwon-si, Gyeonggi-do 442-742 (KR)
(72) Inventor: Lee, Kyung-geun, Bundang-gu, Seongnam-si Gyeonggi-do (KR); Park, In-sik, 2-dong, Paldal-gu, Suwon-si Gyeonggi-do (KR); Yoon, Du-seop, Gwonseon-gu, Suwon-si Gyeonggi-do (KR)
(74) Representative: Davies, Robert Ean

(57) **Abstract**

A method of transferring data with respect to an optical storage medium comprising a lead-in area, which comprises a read only area and a readable/recordable area, and a user data area in which user data is recorded, the method comprising:
transferring first data with respect to a first wobble formed in the read only area of the lead-in area;
transferring second data with respect to the readable/recordable area, in which a second wobble is formed, of the lead-in area;
transferring user data with respect to the user data area;
wherein the first wobble is modulated by a first modulation method and the second wobble is modulated by a second modulation method different to the first modulation method and the second modulation method comprises a minimum shift keying (MSK) modulation method and a saw tooth wobble (STW) modulation method.

## Description

The present invention relates to an optical disc which can be manufactured under uniform conditions by forming grooves and lands on the entire surface of the disc consisting of a lead-in area, a user data area and a lead-out area, and which is configured to obtain a highly reliable recording/reproduced signal.

In general, optical discs are widely employed as information recording media for an optical pickup device for recording/reproducing information in a non-contact type, and are classified into compact discs (CDs) and digital versatile discs (DVDs) according to information recording capacity. Further, a DVD disc capable of writing, erasing and reading information can be subdivided into a digital versatile disc-random access memory (DVD-RAM) disc and a digital versatile disc-rewritable (DVD-RW) disc.

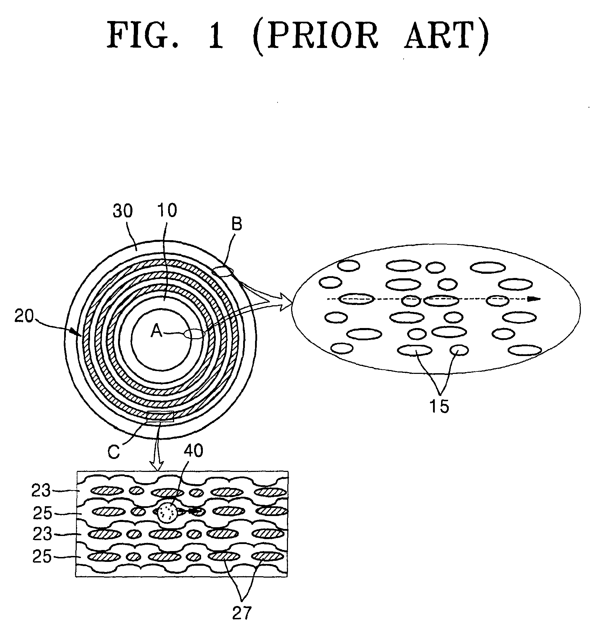

In such a DVD-RAM or DVD-RW disc, as shown in Figure 1, there are a lead-in area 10 in which read only data, such as disc size, number of track layers on a readable plane or illegal copy preventing information, is recorded, a user data area 20 in which user data can be repeatedly read and/or written, and a lead-out area 30 in which other disc-related information is recorded.

As shown in Figure 1 showing a partially enlarged view of the lead-in area 10 (a portion A) and the lead-out area 30 (a portion B), there are pits 15 which are used for recording read only data.

In the user data area 20, grooves 23 and lands 25 are alternatively formed so as to perform recording and/or reproducing information marks 27 along a predetermined track. Here, reference numeral 40 denotes a reproduction beam.

A noticeable difference between a DVD-RAM and a DVD-RW is a physical area provided for recording. In other words, the DVD-RAM performs recording on both the lands 25 and the grooves 23, while the DVD-RW performs recording only on the grooves 23. However, these two standard formats of discs are involved in the following problems.

First, while a DVD-RW having physically the same recording structure as a DVD-ROM which is a read only disc, is excellent reproduction compatibility in DVD-ROM drives or DVD players, a DVD-RAM having a phase difference depending on depths of a land and a groove requires hardware modification for suitably tracking lands and grooves, which means a poor reproduction compatibility.

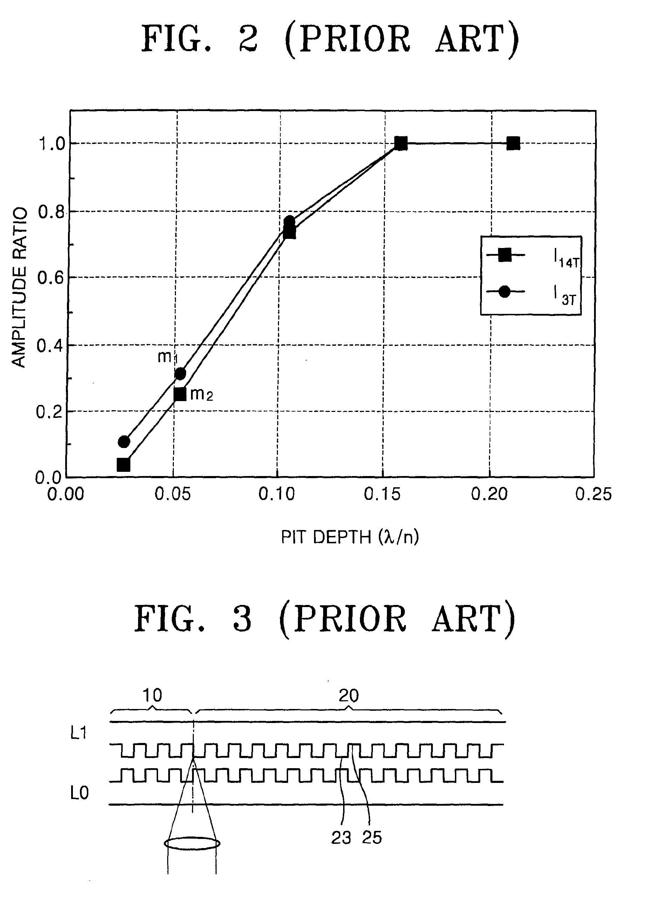

Second, in consideration of recording/reproduction characteristics or injection-molding characteristics in recording data on a groove in a DVD-RW, the formed groove is two or more times shallower than that in a DVD-RAM. Here, if necessary, read only data is formed on the lead-in area 10 in the form of pits 15. Figure 2 is a graph showing the amplitude ratio of a reproduced signal with respect to a pit depth represented in λ/n unit for a wavelength (λ) of a reproduced beam to a refractive index (n) of a disc.

Here, in the cases where the lengths of a recording mark for the minimum recording mark length T are 3T and 14T, the amplitude ratios denoted by m₁ and m₂ are in the range of between 0.2 and 0.3 when the pit depth is approximately 0.06 in λ/n unit, which corresponds to a groove depth of a DVD-RW. When the pit depth is 0.25, the amplitude ratio is approximately 1. Thus, when the pit depth is λ/12n, corresponding to a groove depth of a DVD-RW, the signal level is approximately 30% (1:0.3) compared to the case when the pit depth is λ/4n. As described above, if read only data which is as shallow as a groove depth, is formed in a DVD-RAM, a reliable pit signal cannot be obtained.

Third, in order to enhance recording capacity, as shown in Figure 3, there is demand for a multi-layered optical disc having a plurality of recording layers, looking from the direction of incident beam. For example, in a dual recording layer disc of a first recording layer L0 and a second recording layer L1, when recording is performed on the second recording layer L1, recording laser passes through the first recording layer L0. In this case, there is a difference in light power between a pit portion and a groove portion. Also, in the case of using a physical header representing a basic recording unit in a data area, since the physical header area always remains crystallized, unlike the recording area, there is a difference in light transmittance.

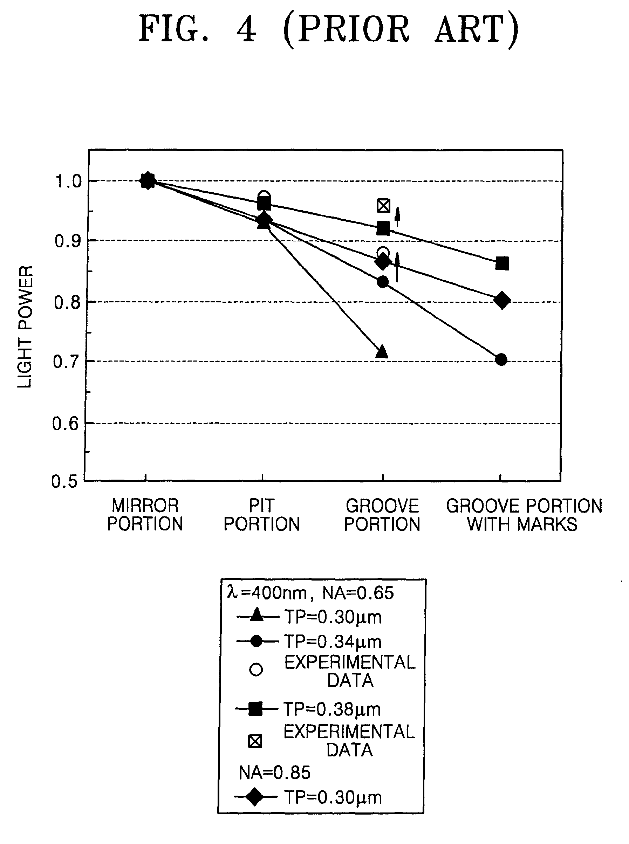

Figure 4 is a graph showing light power for each of a mirror portion, pit portion, groove portion and a groove portion with marks. As shown in Figure 4, the physical geometry of the first recording layer 10 affects light power.

Table 1 lists conditions used in experiments of light power.

**Table 1**

| Parameter | Condition |
|---|---|
| Wavelength (nm) | 400 |
| Numerical aperture (NA) | 0.65/0.85 |
| Minimum mark length (µm) | 0.275/0.194 |
| Modulation | EFM+ (Eight-to-Fourteen Modulation-plus) |
| Track pitch (µm) | 0.30, 0.34, 0.38 |
| Reflectivity (%) | Rc=25, Ra=5 |

In Table 1, Rc represents the reflectivity of a crystallized portion of a recording layer and Ra represents the reflectivity of an amorphous portion of a recording layer. According to experimental results, a decrease in the light power is smallest in the mirror portion, and the light power gradually decreases in the order of a pit portion, a groove portion and a groove portion with marks. A recording/reproducing beam 40 is trapped over a boundary of the lead-in area 10 of the first recording layer L0 and the data area 20 having grooves, as shown in Figure 3, and thus the light amount of the beam irradiated onto the second recording layer L1 is different than the case when a recording/reproducing beam 40 extends over only grooves. As described above, the groove portion with marks adversely affects the recording power when data is written on the second recording layer L1 of the dual-layered optical disc, resulting in poor recording/reproduction efficiency.

In order to reduce a spot size of a reproducing beam for high-density attainment, a numerical aperture (NA) should be increased. Here, the problem with a dual recording layer disc, that is, a difference in light power, becomes more serious as the NA increases. Factors causing a difference in light power with increased NA are listed in Table 2.

**Table 2**

| Item | Parameter | Example |
|---|---|---|
| Dual recording layers | Structure of first recording layer | Grooves, pits,... |
| High NA | Number of tracks trapped by beam | 85 for NA 0.65 |
| | | 160 for NA 0.85 |
| | Incident angle of beam | 40.5° for NA 0.65 |
| | | 58.2° for NA 0.85 |

As shown in Table 2, in the case where grooves and pits are formed in the first recording layer of a dual recording layer disc, as the NA becomes higher, the number of tracks trapped by a beam increases and the incident beam angle increases, greatly affecting the light power.

Fourth, when mastering a disc, the manufacturing conditions of the disc may vary depending on different structures of the disc in lead-in area (pits), data area (grooves) and lead-out area (pits), which makes the manufacturing process complex resulting in a poor yield and an increased manufacturing cost.

It is an aim of the present invention to provide an optical disc with an improved yield, a reduced manufacturing cost and an improved recording/reproducing capacity.

It is a preferred aim of the present invention to provide an optical disc having an improved structure of multiple recording layers such that light power is uniformly irradiated to the multi-layered disc during recording/reproducing.

According to the present invention there is provided an optical disc for recording and/or reproduction, comprising a lead-in area, a user data area and a lead-out area, each having grooves and lands formed thereon.

Preferably, data in the user data area is recorded on at least one side of the lands and grooves.

Preferably, wobbles are formed on at least one side of the grooves and lands as read only data.

As one option, preferably, wobbles in the lead-in area, the user data area and the lead-out area are modulated by the same modulation technique.

As a second option, preferably the wobbles in at least one of the lead-in area, the user data area and the lead-out area are modulated by a different modulation technique.

Preferably, wobbles in the lead-in area and the lead-out area are modulated by a modulation technique different from that for the wobbles in the user data area.

Preferably, the wobbles are modulated by a frequency modulation technique, an amplitude modulation technique, or a phase modulation technique.

Preferably, the wobbles are modulated by any one or more of a QPSK Quadrature Phase Shift Keying technique, a MAM Modified Amplitude Modulation technique in which a wobbled portion of a single frequency having a predetermined period and a non-wobbled portion having a predetermined period are merged, a minimum shift keying (MSK) modulation technique in which only frequencies in a predetermined period consisting of consecutive wobbles are varied, or a saw tooth wobble (STW) modulation technique.

Preferably, at least one recording layer is provided.

Preferably, in addition to the lead-in area, the lead-out area and the user data area, a predetermined area for a specific purpose is further provided.

Preferably, the lead-in area includes a read only data area and a write/read data area.

Preferably, first wobbles are formed in the read only data area and second wobbles modulated by a modulation technique different from that for the first wobbles are formed in the write/read data area. Preferably, the first wobbles are modulated by at least one selected from QPSK modulation, frequency modulation, amplitude modulation, modified amplitude modulation (MAM), MSK modulation and STW modulation, and the second wobbles are modulated by a modulation technique different from that for the first wobbles. Preferably, the first wobbles are high-frequency wobbles and the second wobbles are low-frequency wobbles with respect to the first wobbles.

Preferably, in the read only data area, a header field indicating address information is positioned at the front or rear of an ECC recording unit or at the interface of ECC recording units.

Preferably, the wobbles formed at the header field are low-frequency wobbles.

Preferably, track pitches for the write/read area and the read only data area are different from each other. Preferably, the track pitch for the read only data area is greater than that of the write/read area.

According to another aspect of the present invention there is provided an optical disc for recording and/or reproduction, wherein a lead-in area, a user data area and a lead-out area, each having grooves and lands formed thereon, are provided, and data in the user data area is recorded on at least one side of the lands and grooves.

According to yet another aspect of the present invention there is provided an optical disc for recording and/or reproduction, wherein a lead-in area, a user data area and a lead-out area are provided each having grooves and lands formed thereon, and the lead-in area includes a read only data area and a write/read data area.

For a better understanding of the invention, and to show how embodiments of the same may be carried into effect, reference will now be made, by way of example, to the accompanying diagrammatic drawings in which:
Figure 1 is an enlarged view illustrating portions A, B and C of a conventional optical disc;
Figure 2 is a graph illustrating the amplitude ratio of a reproduced signal with respect to pit depth;
Figure 3 is a partially cross-sectional view illustrating a conventional optical disc;
Figure 4 is a graph illustrating light power for various cases;
Figure 5 is an enlarged view illustrating portions C, D and E of an optical disc according to the present invention;
Figure 6 shows a one-side wobbling method of an optical disc according to an embodiment of the present invention;
Figure 7 shows a wobble-and-land prepit combination method of an optical disc according to another embodiment of the present invention;
Figure 8A shows waveforms obtained from wobbles based on a frequency modulation technique;
Figure 8B shows waveforms obtained from wobbles based on a phase modulation technique;
Figure 8C shows waveforms obtained from wobbles based on an amplitude modulation technique;
Figure 8D shows waveforms obtained from wobbles based on a Modified Amplitude Modulation (MAM) technique;
Figure 9 shows a Quadrature Phase Shift Keying (QPSK) technique according to another embodiment of the present invention;
Figures 10 through 12 shows waveforms obtained from wobbles according to another embodiment of the present invention;
Figures 13 and 14 show arrangement of a header field indicating address information for an area in which read only data is recorded as wobble signals, and a read only data field, in an optical disk according to the present invention; and
Figure 15 is a schematic diagram of a system for recording data on and/or reproducing data from the optical disc according to the present invention.

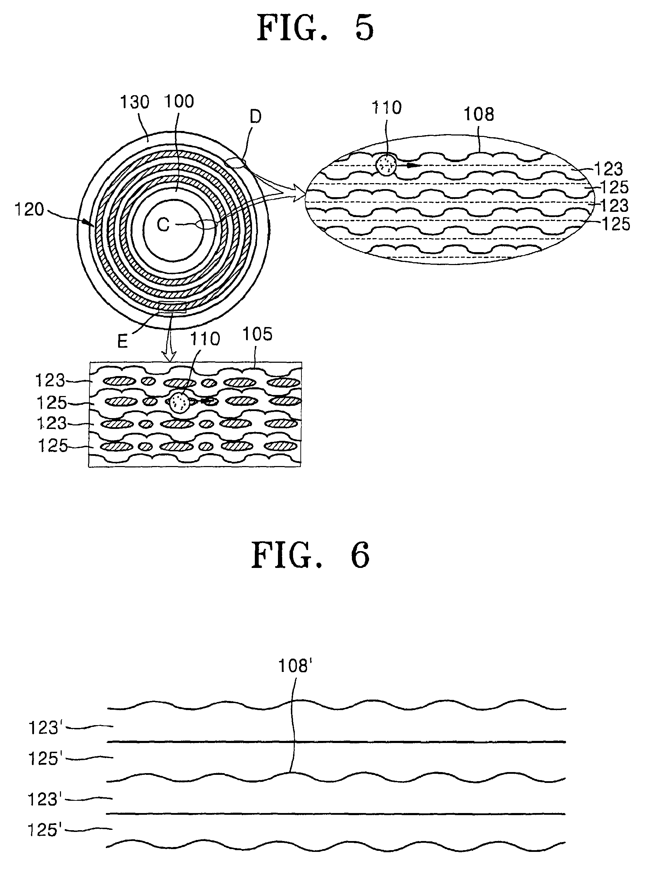

Referring to Figure 5, an optical disc according to the present invention includes a lead-in area 100, a user data area 120 and a lead-out area 130, and grooves 123 and lands 125 are formed on the entire surface thereof.

User data can be recorded only on the grooves 123 or on both the grooves 123 and the lands 125.

When read only data is recorded, waveforms of wobble signals 105 are consecutively recorded on at least one side of the grooves 123 and lands 125, instead of pits. Referring to Figure 5 which is an enlarged view of portions "C" and "D", the grooves 123 and the lands 125 are alternately formed in the lead-in and lead-out areas 100 and 130, and waveform wobble signals 108 are formed on both the grooves 123 and the lands 125. Also, referring to Figure 5 showing a portion "E", which is a part of the user data area 130, the grooves 123 and the lands 125 are alternately formed, and the wobble signals 103 are formed on both the grooves 123 and the lands 125. Recording and/or reproduction are performed while a recording/reproduction beam 110 travels along groove and/or land tracks.

In forming wobbles, as shown in Figure 6, a one-side wobbling method in which wobbles 108' are formed on at least one side of the lands 125' and grooves 123', may be used. Otherwise, wobbles may be formed on both sides of the grooves 123' and the lands 125'.

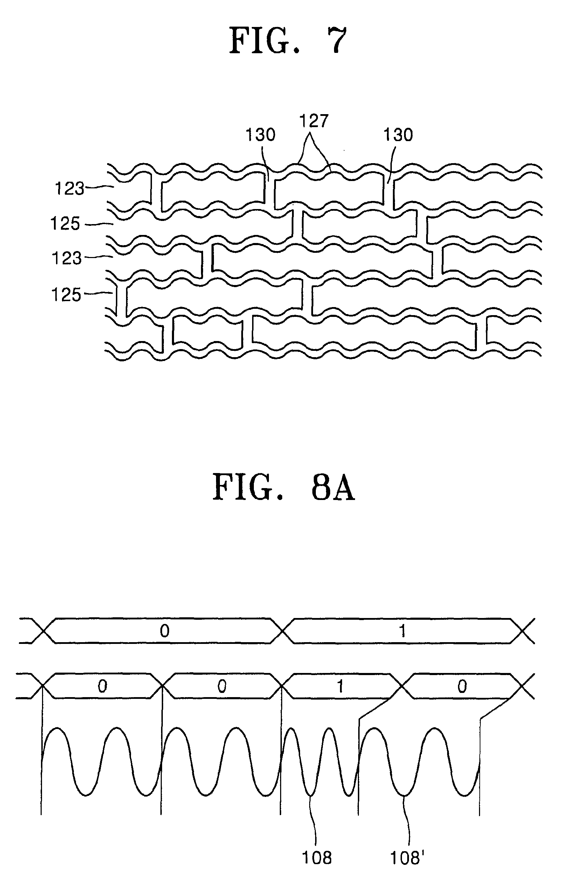

Figure 7 shows a method of recording read only data by a combination of wobbles 127 and land prepits 130 formed on lands 125 at predetermined intervals. The land prepits 130 are formed on a predetermined area during the manufacture of a disc substrate. A pickup device provided in a recording/reproducing apparatus can easily move to a desired location using the information recorded in the land prepits 130. Also, the pickup device can identify sector number or type, land/groove or the like, using the information recorded in forms of land prepits, and can perform servo control.

As described above, according to the present invention, read only data is recorded as wobble signals rather than pits, the physical geometry of the recording layer are the same throughout the entire surface of the disc. Thus, there is a less reduction in light power of a disc consisting of multiple layers than the conventional disc.

Figure 8A shows an example of wobble signal modulation according to the present invention, that is, a frequency modulation technique, whereby data is recorded by changing frequencies of wobble signals 108 and 108' based on a frequency modulation technique. For example, data is recorded in combinations of bits of logic "0" or "1". Data is recorded in such a manner that the frequencies of the wobble signals 105 and 105', are made different in cases of bits of logic "0" and logic "1", respectively. The frequency of the wobble signal of logic "0" is greater than that of logic "1", so that the bits of having logic values "0" and "1" can be discriminated.

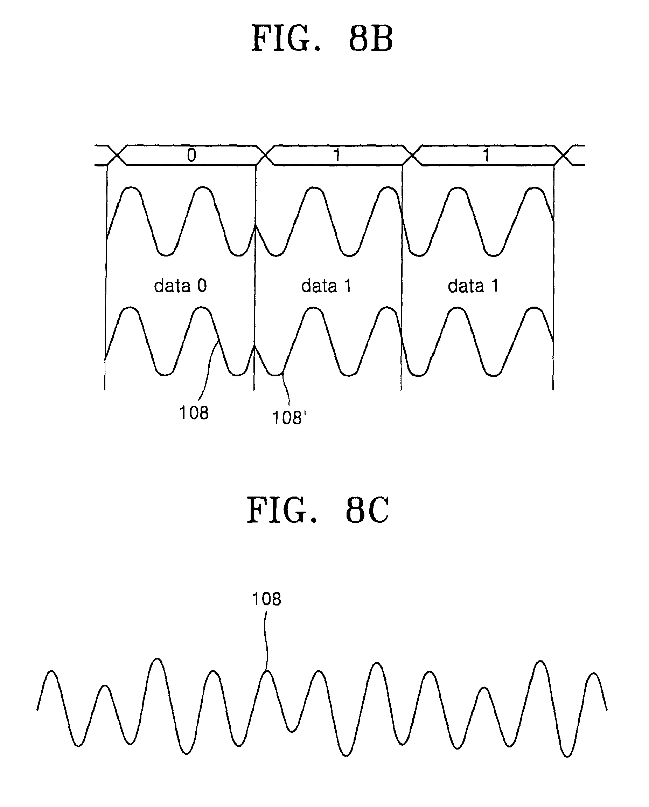

Alternatively, a phase modulation technique may be used in recording data, as shown in Figure 8B, whereby phases of wobble signals 108 and 108' are shifted. That is, data is recorded in such a manner that the phases of the wobble signals in cases of a bit of logic "0" and a bit of logic "1", are made different. For example, a phase difference of 180° is made between the wobble signal of logic "0" and the wobble signal of logic "1".

Also, wobble signals can be modulated by an amplitude modulation technique, as shown in Figure 8C. That is, data is recorded in such a manner that amplitudes of wobble signals of bits of logic "0" and "1", are made different.

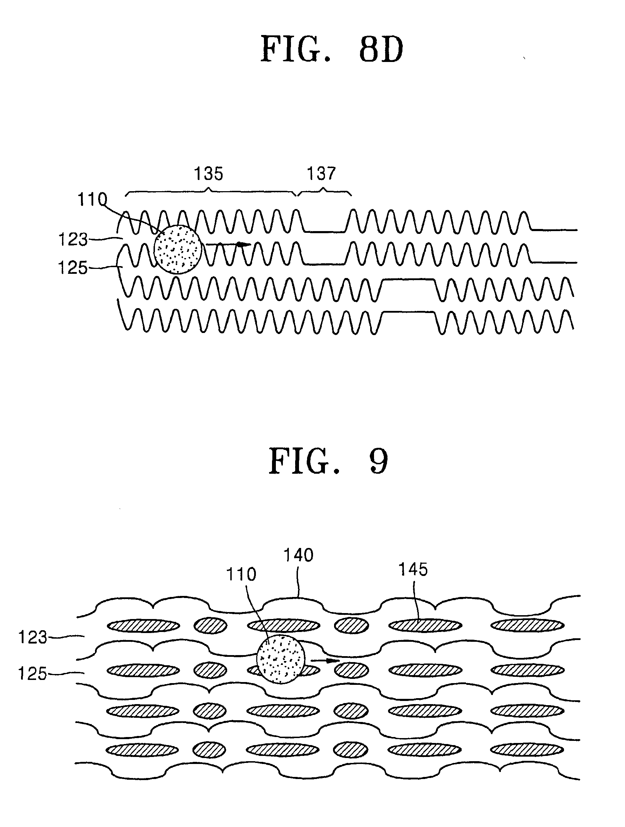

As shown in Figure 8D, data may be recorded by a MAM (Modified Amplitude Modulation) technique, in which a wobbled portion 135 of a single frequency having a predetermined period and/or a non-wobbled portion 187 having a predetermined period, are merged. For example, the lengths of neighboring wobbled portions or the lengths of neighboring non-wobbled portions are made different, thereby recording data.

Alternatively, as shown in Figure 9, data can be recorded by QPSK (Quadrature Phase Shift Keying) modulation, whereby the phases of the respective wobble signals 140 are different from each other at 90°. Here, reference numeral 145 denotes a recording mark corresponding to user data. As described above, if read only data is recorded as wobble signals, both the user data and the read only data are stored in the groove and/or land tracks, thereby enhancing the utilization efficiency of a recording area of a disc.

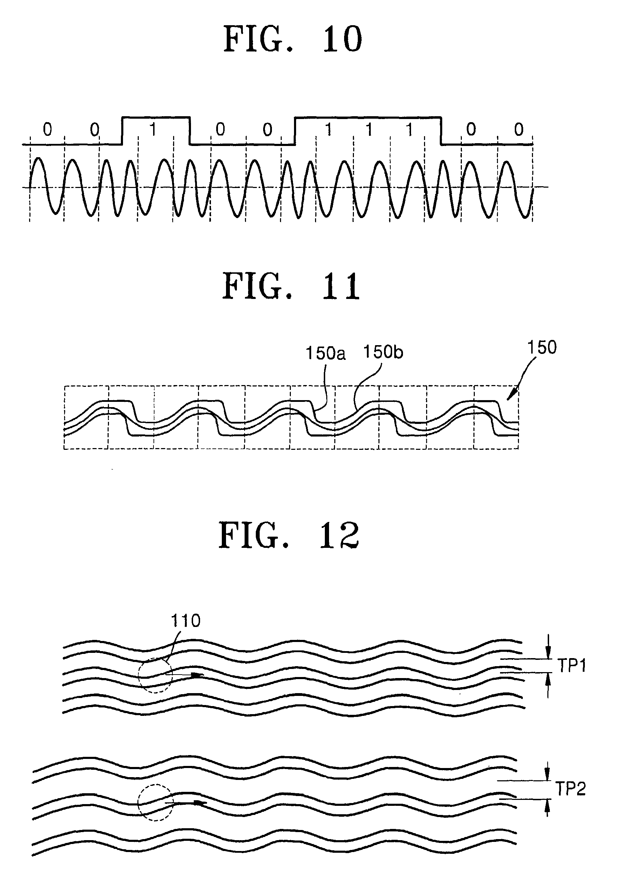

As shown in Figure 10, data can be recorded by MSK (Minimum Shift Keying) modulation, whereby only the frequencies in a predetermined period consisting of consecutive wobble signals 140 are varied. Also, as shown in Figure 11, STW modulation may be employed, whereby saw tooth wobbles 150 are formed. The logic states "0" or "1" of the saw tooth wobbles 150 are determined by the shapes of a relatively sharply sloping portion 150a and a relatively gently sloping portion 150b. Otherwise, as shown in Figure 12, a crosstalk between tracks can be reduced by making track pitches TP1 and TP2 of wobbles different.

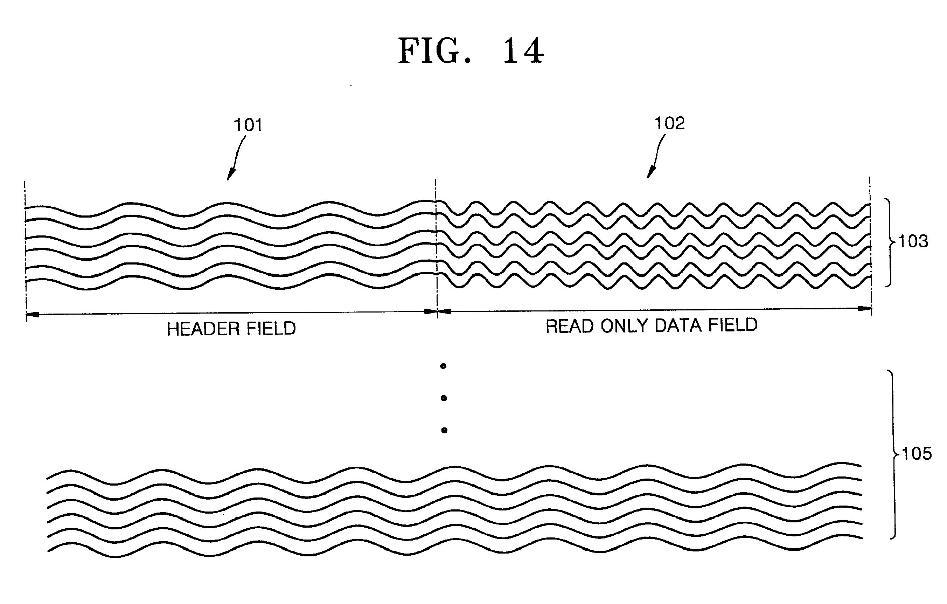

As shown in Figure 14, an optical disc according to another embodiment of the present invention includes a read only data area 103 and a write/read data area 105 provided in the lead-in area (100 shown in Figure 5). In the read only data area, data is recorded by first wobbles. In the write/read data area 105, second wobbles are formed. The first and second wobbles may be modulated by different modulation techniques or indicated by different specifications. In other words, the first wobbles are modulated by at least one selected from QPSK modulation, frequency modulation, amplitude modulation, modified amplitude modulation (MAM), MSK modulation and STW modulation, and the second wobbles are modulated by a modulation technique different from that for the first wobbles.

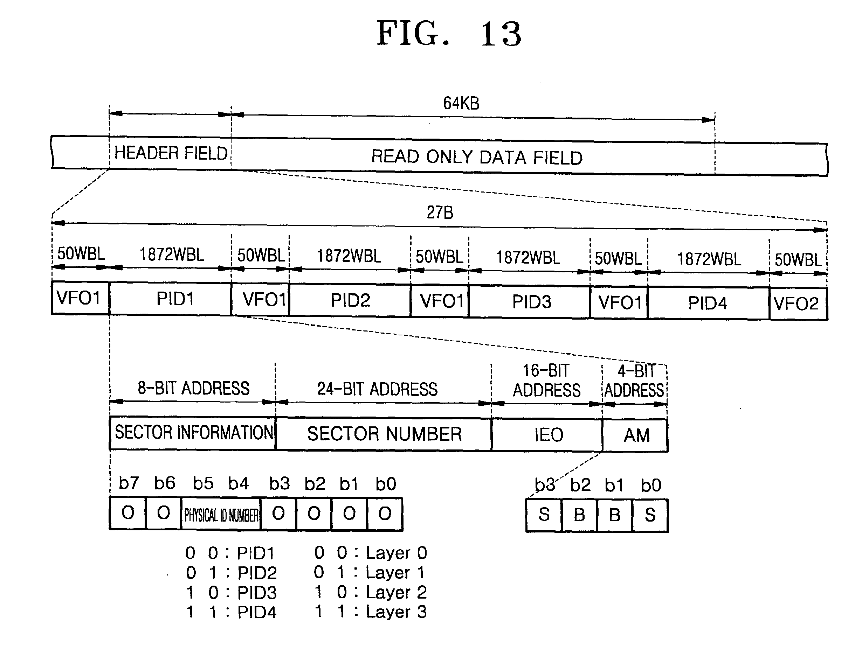

As shown in Figure 13, address information is contained in the entire area of the grooves in the write/read area 105, and a header field 101 indicating address information and a read only data field 102 are provided in the read only data area 103. The header field 101 may be positioned at the front or rear of an ECC recording unit or at the interface of ECC recording units. Here, the specification of wobbles in the header field 101 may be identical with or different from that of wobbles in the write/read data area or read only data area. In particular, as shown in Figure 14, wobbles formed in the read only data field 102 of the read only data area 103 are high-frequency wobbles and wobbles formed in the header field 101 and the write/read data area 105 are low-frequency wobbles. This is for preventing a reproduction signal from deteriorating when the address information contained in the header field 101 is recorded at high frequency.

Also, in order to reduce crosstalk between tracks, track pitches for the write/read area 105 and the read only data area 103 are preferably different form each other. More preferably, the track pitch for the read only data area 103 is greater than that of the write/read area 105.

The above-described optical disc according to the present invention may further include a predetermined area formed for a specific purpose in addition to the lead-in area 100, the data area 120 and the lead-out area 130.

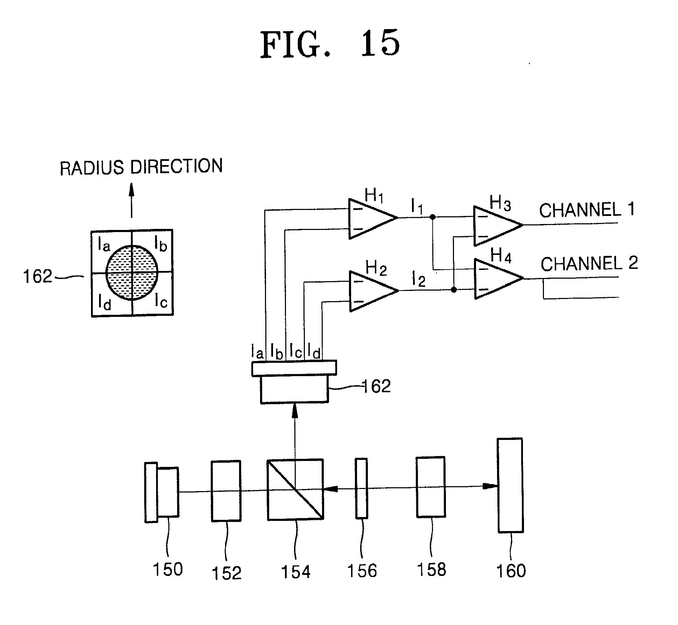

Figure 15 is a schematic diagram of a system for recording data on and/or reproducing data from the optical disc according to the present invention. The system includes a laser diode 150 for radiating light, a collimating lens 152 for collimating the light radiated from the laser diode 150, a polarizing beam splitter 154 for changing the traveling path of incident light according to the polarization direction of the incident light, a 1/4 wavelength plate 156 and an objective lens 158 for focusing the incident light onto an optical disc 160. The light reflected from the optical disc 160 is reflected by the polarizing beam splitter 154 to then be received in a photodetector, e.g., a quadrant photodetector 162. The light received in the quadrant photodetector 162 is converted into an electrical signal and output to a channel 1 in which the electrical signal is detected as an RF signal and to a channel 2 in which the electrical signal is detected as a wobble signal by a push-pull method. Here, H1, H2, H3 and H4 denote DC amplifiers, Ia, Ib, Ic and Id denote first through fourth current signals output from the quadrant photodetector 162.

According to the optical disc of the present invention, read only data can be formed by various modulation schemes described above. In particular, wobble signals can be formed on the lead-in area 100, the lead-out area 130 and the user data area 120 by the same modulation technique.

On the other hand, wobble can be formed by different modulation techniques according to the disc area, that is, the lead-in area 100, the user data area 120 or the lead-out area 130. For example, at least one selected from frequency modulation, phase modulation, amplitude modulation, modified amplitude modulation, QPSK modulation, MSK modulation and saw tooth wobble modulation, can be employed in the user data area 120. Then, a modulation technique different from that employed in the user data area 120, may be employed in the lead-in area 100 and the lead-out area 130.

In order to increase the storage capacity, the present invention provides a disc having at least one recording layer. For example, in the case of a dual-layer disc consisting of a first recording layer and a second recording layer, in the present invention, grooves and lands are formed on the entire surface of the disc and read only data is formed uniformly as wobble signals. Thus, there is no difference in the light power at the boundary between the lead-in area or lead-out area and the user data area.

As described above, in the optical disc according to the present invention, grooves need only to be consecutively formed throughout the entire surface of the disc, which means easy manufacturability and advantages from the viewpoint of controllability of mastering parameters. Also, since the same manufacturing condition can be adopted in mastering discs, the yield can be enhanced and the manufacturing cost can be reduced. Further, the light power can be uniformly adjusted while recording/reproducing data on/from a multiple-layered disc, by forming read only data as wobbles rather than pits.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of transferring data with respect to an optical storage medium comprising a lead-in area, which comprises a read only area and a readable/recordable area, and a user data area in which user data is recorded, the method comprising:
transferring first data with respect to a first wobble formed in the read only area of the lead-in area;
transferring second data with respect to the readable/recordable area, in which a second wobble is formed, of the lead-in area;
transferring user data with respect to the user data area;
wherein the first wobble is modulated by a first modulation method and the second wobble is modulated by a second modulation method different to the first modulation method and the second modulation method comprises a minimum shift keying(MSK) modulation method and a saw tooth wobble(STW) modulation method.
